# EUROPEAN PATENT SPECIFICATION

(11) **EP 4 437 533 B1**
(45) Date of publication and mention of the grant of the patent: **05.11.2025**
(21) Application number: 24708104.5
(22) Date of filing: 26.01.2024
(51) Int. Cl.: G10L 13/02, G10L 25/30

(54) **SEMI-SUPERVISED TEXT-TO-SPEECH BY GENERATING SEMANTIC AND ACOUSTIC REPRESENTATIONS**
HALBÜBERWACHTE TEXT-ZU-SPRACHE DURCH ERZEUGUNG SEMANTISCHER UND AKUSTISCHER DARSTELLUNGEN
SYNTHÈSE VOCALE SEMI-SUPERVISÉE PAR GÉNÉRATION DE REPRÉSENTATIONS SÉMANTIQUES ET ACOUSTIQUES

(30) Priority: 26.01.2023 US 202363441418 P
(43) Date of publication of application: 02.10.2024
(73) Proprietor: GOOGLE LLC, Mountain View CA 94043 (US)
(72) Inventor: KHARITONOV, Evgeny, 75009 Paris (FR); VINCENT, Damien, 8002 Zürich (CH); BORSOS, Zalán, 8002 Zürich (CH); MARINIER, Raphaël, 75009 Paris (FR); PIETQUIN, Olivier, Claude, 59800 Lille (FR); SHARIFI, Matthew, 8002 Zurich (CH); TAGLIASACCHI, Marco, 8002 Zurich (CH); ZEGHIDOUR, Neil, 75009 Paris (FR)
(74) Representative: Hau, Darren Jun Wai
(86) International application number: PCT/US2024/013149
(87) International publication number: WO 2024/159120

(56) References cited:
- CN-A- 115 240 633
- CN-A- 116 364 055
- CHENPENG DU ET AL: "VQTTS: High-Fidelity Text-to-Speech Synthesis with Self-Supervised VQ Acoustic Feature", ARXIV.ORG, CORNELL UNIVERSITY LIBRARY, 201 OLIN LIBRARY CORNELL UNIVERSITY ITHACA, NY 14853, 11 May 2022 (2022-05-11), XP091218415
- BORSOS ZALÁN ET AL: "AudioLM: A Language Modeling Approach to Audio Generation", IEEE/ACM TRANSACTIONS ON AUDIO, SPEECH, AND LANGUAGE PROCESSING, vol. 31, 7 September 2022 (2022-09-07), pages 2523 - 2533, XP093146656, ISSN: 2329-9290, Retrieved from the Internet <URL:https://arxiv.org/pdf/2209.03143v1.pdf> DOI: 10.1109/TASLP.2023.3288409
- KHARITONOV EUGENE ET AL: "Speak, Read and Prompt: High-Fidelity Text-to-Speech with Minimal Supervision", TRANSACTIONS OF THE ASSOCIATION FOR COMPUTATIONAL LINGUISTICS, vol. 11, 21 December 2023 (2023-12-21), pages 1703 - 1718, XP093146668, ISSN: 2307-387X, Retrieved from the Internet <URL:https://arxiv.org/pdf/2302.03540v1.pdf> DOI: 10.1162/tacl_a_00618

## Description

### CROSS-REFERENCE TO RELATED APPLICATIONS

This application claims priority to U.S. Provisional Application No. 63/441,418, filed on January 26, 2023.

### BACKGROUND

This specification relates to generating audio from text using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current value inputs of a respective set of parameters. Du, Chenpeng, et al. "VQTTS: High-fidelity text-to-speech synthesis with self-supervised VQ acoustic feature." arXiv preprint arXiv:2204.00768 (2022) discloses "VQTTS" consisting of an acoustic model (AM) txt2vec and a vocoder vec2wav, which uses self-supervised vector-quantized acoustic features rather than mel-spectrogram. The AM and the vocoder are redesigned. txt2vec becomes a classification model instead of a traditional regression model while vec2wav uses an additional feature encoder before HifiGAN generator for smoothing the discontinuous quantized feature. Borsos, Zalán, et al. "AudioLM: a language modeling approach to audio generation." IEEE/ACM transactions on audio, speech, and language processing 31 (2023): 2523-2533 discloses "AudioLM", a framework for high-quality audio generation with long-term consistency. AudioLM maps the input audio to a sequence of discrete tokens and casts audio generation as a language modeling task in this representation space. Chinese Patent Application Publication No. CN 115240633 A discloses a text-to-voice conversion method and device, equipment and a storage medium. The method includes generating a predicted speech representation of a first speaker reading a target text based on the target text to be converted and a first tone of the first speaker. The predicted speech representation indicates a speech feature that varies over time. The method further includes generating a predicted time-frequency representation of the second speaker readout target text based on the predicted speech representation and a second tone of the second speaker. The predicted time-frequency representation indicates speech signal strength over time over different frequencies. The method further includes converting the predicted time-frequency representation into audio of the target text read by the second speaker.

### SUMMARY

According to a first aspect there is provided a computer-implemented method according to claim 1 for generating an audio signal from input text. This method comprises receiving a request to convert input text into an audio signal, wherein the input text comprises a plurality of tokenized text inputs.

As used in this specification, tokenized text inputs are a sequence of tokens that each represent text of the input text. Each token is selected from a vocabulary of tokens, where each token represents a one or more characters, word pieces, and other text symbols.

This method generates, using a first generative neural network, a semantic representation of the tokenized text inputs comprising semantic tokens representing semantic content of the tokenized text inputs. Each semantic token is selected from a vocabulary of semantic tokens and represents semantic content of the input text. Examples of semantic content represented by the semantic tokens can include linguistic content for speech.

This method further generates, using a second generative neural network and conditioned on at least the semantic representation, an acoustic representation of the semantic representation comprising one or more respective acoustic tokens representing acoustic properties of the audio signal. When the generation is conditioned on a context that specifies acoustic properties of the audio signal to be generated, the system can condition the generation on the context. Examples of this can include when the context specifies a target voice prompt for the output audio signal.

This method finally processes the acoustic representation using a decoder neural network to generate the audio signal.

According to further aspects, there is provided a system according to claim 14 and one or more non-transitory computer storage media according to claim 15. Particular embodiments of the subject matter described in this specification can be implemented so as to realize one or more of the following advantages.

Conventional systems that use neural networks to generate speech from text require a large amount of labeled data to train the neural network. In particular, these systems require a large amount of parallel data (e.g., data including input text and speech outputs, i.e. corresponding text and speech pairs) in order to effectively train the neural network.

In some examples, however, a large amount of parallel data is not available. For example, parallel data may not be as abundant for certain low-resource languages. In this case, a conventionally trained system generates speech that may not be diverse and has limited speech generation capacity as a result of lack of diversity in the parallel data. For example, the parallel data used to train the neural network may not include speakers with various accents, speakers of diverse demographics, or may be recorded in heterogenous recording conditions, as a result of the limited amount of data for the low-resource language. Such data could only comprise a single speaker or a limited number of speakers.

In contrast, the system described leverages audio-only data (i.e. unlabeled audio data) to reduce the need for supervision in training the generative neural networks, which can increase efficiency and can increase the amount of diversity in the training data. In particular, the system generates a semantic representation from input text and an acoustic representation from the semantic representation, which reduces the training into two sequence-to-sequence tasks. By dividing the training into two tasks, the system can use a generative neural network for each task, which allows for increasing efficiency in inference and decreasing latency in training. For example, the method and system can generate the acoustic representation from the semantic representation by training the generative neural network on a large amount of unlabeled speech data, allowing for increased efficiency in training and for greater diversity in generating speech for low-resource languages.

Additionally, the method and system can perform pre-training and backtranslation on the generative neural network that generates the semantic representation from the input text. By performing pre-training and backtranslation, the system fine-tunes the generative neural network, which reduces the amount of parallel data supervision required for training. For example, the system can produce a large dataset by combining pretraining and backtranslation to draw data from a small parallel dataset, which increases the overall efficiency of the process of training the generative neural network and improves the performance of the generative neural network. That is, the generative neural network may be pre-trained on unlabeled audio data. The generative neural network may also be trained on a backtranslation task, that is, converting from a semantic representation back to its corresponding text, using the small parallel dataset. The backtranslation model may be used to synthesize text corresponding to the unlabeled audio data to generate a large quantity of additional synthetic parallel data. This additional parallel data and the small parallel dataset may be used to fine-tune the generation system. In this way, only a small amount of parallel data may be required for training. In conventional text to speech systems, hundreds of hours of parallel data may be required to train the system. Using the techniques disclosed herein, the more abundant and more easily obtainable unlabeled audio data may be used instead, together with a small amount of true parallel data. In some cases, the amount of true parallel data can be as little as 15 minutes from a single speaker whilst still maintaining comparable performance.

Additionally, the system can perform voice prompting on the generative neural network that generates the acoustic representation from the semantic representation. By performing prompting, the system can use multiple speakers as target speakers in generating the acoustic representation using the generative neural network. The system conditions the neural network with a small portion of semantic representation and acoustic representation of a target voice prompt from the target speaker. Using the target voice prompts allows for the generative neural network to generate acoustic representations that include features (e.g., voice, tempo, and recording conditions) of the target speaker, which can be leveraged for multiple speakers. By performing voice prompting, the system can generate audio in the form of a variety of speakers using a small portion of data, which can increase the diversity of the generated speech. That is, the system can generalize to unseen speakers and the system does not require any speaker labelling of the training data.

Overall, by dividing the generation tasks to a first task of generating the semantic representation from the tokenized text inputs and a second task of generating the acoustic representations from the semantic representation, the system described reduces latency associated with data collection by using pre-training and backtranslation to leverage a small parallel dataset, and the system generates diverse speech from multiple speakers with increased efficiency. An improved text to speech system with increased capabilities is thereby provided.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example system.
FIG. 2 is a block diagram of an example training system.
FIGs. 3A-3C are example diagrams of an acoustic generative neural network.
FIG. 4 is a flow diagram of an example process for generating an audio signal from text using one or more generative neural networks.

Like reference numbers and designations in the various drawings indicate like elements.

### DETAILED DESCRIPTION

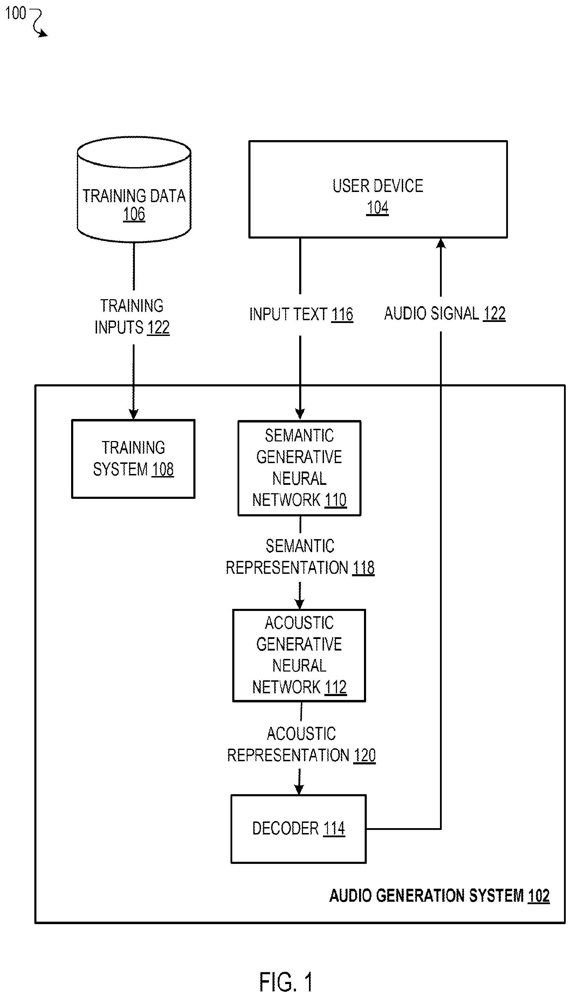

FIG. 1 shows an example system 100. The system 100 is an example of a system implemented as computer programs on one or more computers in one or more locations in which the systems, components, and techniques described below are implemented.

The system 100 is configured to generate an audio signal from text using a first and a second generative neural network. An audio signal may be an audio waveform or any suitable audio encoding.

The system 100 includes an audio generation system 102, a user device 104, and training data 106. The user device 104 can be a computer, and the user device 104 can provide input text 116 to the audio generation system 102.

The input text 116 includes text tokens (e.g., tokenized inputs) selected from a vocabulary of text tokens that represent or more characters, word pieces, or other text symbols.

The audio generation system 102 includes a training system 108, a semantic generative neural network 110 (first generative neural network), an acoustic generative neural network 112 (second generative neural network), and a decoder 114.

The audio generation system 102 is configured to process the input text 116 using the semantic generative neural network 110 and the acoustic generative neural network 112 to generate an audio signal 122.

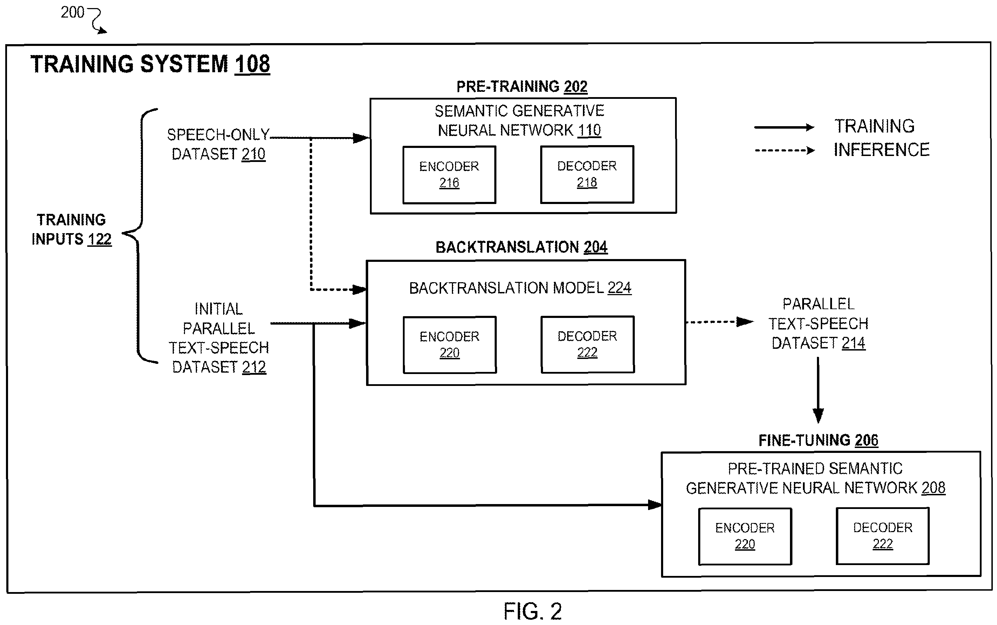

In particular, the system generates a semantic representation 118 of the input text 116 by using the semantic generative neural network 110 to process the input text 116, and the system provides the semantic representation 118 to the acoustic generative neural network 112. The semantic representation 118 includes one or more semantic tokens each representing semantic content of the tokenized text inputs. In particular, the system selects each semantic token from a vocabulary of semantic tokens, as described in further detail below with reference to FIG. 2.

In some examples, the semantic tokens represent linguistic content, such as phonetics and semantics, and do not represent paralinguistic information, such as speaker identity and acoustic information.

By using the semantic representation 118 as an intermediate representation between the input text 116 and the acoustic representation 120, the system can encode the semantic representation 118 with largely phonetic content and limited speaker information, which can increase the efficiency of mapping text tokens to an acoustic representation.

The system generates an acoustic representation 120 of the semantic representation 118 by using the acoustic generative neural network 112 to process the semantic representation 118.

The acoustic representation 120 includes one or more respective acoustic tokens for each semantic token each representing acoustic properties of the audio signal 122. Any appropriate set of acoustic tokens may be used. For example, as described below, the vocabulary of acoustic tokens may be provided using the codebook of an audio codec.

The system generates the audio signal 122 by using the decoder 114 to process the acoustic representation 120. In particular, the audio signal 122 represents one or more audio characteristics such as voice, tempo, and/or recording conditions.

The semantic generative neural network 110 can have an encoder-decoder Transformer architecture, and the acoustic generative neural network 112 can have a decoder-only Transformer architecture.

Generally, the Transformer architecture includes a sequence of attention blocks, and, during the processing of a given input, each attention block receives a respective input hidden state for each input token in the given input. The attention block then updates each of the hidden states at least in part by applying self-attention to generate a respective output hidden state for each of the input tokens. The input hidden states for the first attention block are embeddings of the input tokens in the input sequence and the input hidden states for each subsequent attention block are the output hidden states generated by the preceding attention block. The output subnetwork then processes the output hidden state generated by the last attention block in the sequence for the last input token in the input sequence to generate an output.

In some examples, the decoder 114 is a decoder neural network part of a neural audio codec (e.g., the SoundStream codec, details of which may be found in N. Zeghidour et al., "SoundStream: An End-to-End Neural Audio Codec," in IEEE/ACM Transactions on Audio, Speech, and Language Processing, vol. 30, pp. 495-507, 2022, or another audio codec) configured to reconstruct audio data by processing an acoustic representation of the audio data.

In particular, the neural codec neural network includes an encoder neural network, a quantizer, and the decoder 114. The encoder neural network can be a neural network configured to convert a fixed input, such as the audio signal 122, into encoded audio data, such as a vector of fixed dimensionality that represents the audio signal 122.

The quantizer can be a residual quantizer configured to quantize the encoded data (e.g. the encoded audio data) using a number of quantization levels (e.g., three quantization levels). In this case, the decoder 114 is configured to use a codebook to map the quantized encoded data to an acoustic representation 120 of one or more acoustic tokens that represent the quantized encoded data, where the codebook includes multiple acoustic tokens. That is, the vocabulary of the acoustic tokens may be based upon the codebook. The decoder can then reconstruct the audio signal 122 by processing the each of the one or more acoustic tokens of the acoustic representation 120.

During training, the audio generation system 102 can use the training system 108 to train the semantic generative neural network 110. In particular, the audio generation system 102 uses the training system 108 to train the semantic generative neural network on training inputs 122 from the training data 106. The audio generation system 102 can use a trained speech representation model (e.g., w2v-BERT, details of which may be found in Y. -A. Chung et al., "w2v-BERT: Combining Contrastive Learning and Masked Language Modeling for Self-Supervised Speech Pre-Training," 2021 IEEE Automatic Speech Recognition and Understanding Workshop (ASRU), Cartagena, Colombia, 2021, pp. 244-250) to generate semantic representations for training, where the one or more semantic tokens represent audio signals from one or more datasets. In particular, the audio generation system 102 generates the semantic representations by using the trained speech representation model to process multiple audio signals from the one or more datasets, and the audio generation system 102 can use the semantic representations for training the semantic generative neural network 110, the acoustic generative neural network 112, or both. For example, the trained speech representation model may provide an embedding of input text. The embedding space may be discretized to provide a vocabulary of semantic tokens. In one example, the embedding space is quantized using k-means clustering.

In particular, the training inputs 122 include a speech-only dataset and an initial parallel text-speech dataset. The speech-only dataset can be a relatively large dataset of training examples that include multiple semantic representations each corresponding to an audio signal. The training system 108 extracts (e.g., generates) the semantic representations of the training examples of the speech-only dataset by processing audio signals of a larger speech-only dataset using the trained speech representation model. In particular, the larger speech-only dataset includes multiple hours of audio recordings from multiple speakers. Each of the audio recordings are unlabeled (e.g., do not include corresponding transcriptions).

The initial parallel text-speech dataset is a relatively small dataset of training examples that includes multiple semantic representations each corresponding to input text, e.g., a transcription of the corresponding audio data. The training system 108 extracts semantic representations of the training examples by processing audio signals of a parallel dataset using the trained speech representation model. The corresponding transcriptions can be, e.g., manually transcribed from each of the audio recordings.

Training the semantic generative neural network 110 is described in more detail below with reference to FIG. 2.

In some examples, the audio generation system 102 can use the training system 108 to train the acoustic generative neural network 112. In particular, the audio generation system 102 uses the training system 108 to train the acoustic generative neural network 112 by providing the training inputs 122 to the acoustic generative neural network 112, as described in further detail below with reference to FIG. 2. In this case, the training inputs 122 further include an audio-only dataset for training the acoustic generative neural network 112. The audio-only dataset can be a dataset of training examples including audio inputs each corresponding to a respective semantic representation and a respective acoustic representation pair. The training system 108 extracts the semantic representation of the training examples of the audio-only dataset from the larger speech-only dataset using the trained speech representation model. Additionally, the training system 108 can generate the corresponding acoustic representation of semantic representation and acoustic representation pairs by processing the audio signals of the audio-only dataset using the neural audio codec, where the acoustic tokens of the acoustic representation are the outputs of the quantizer.

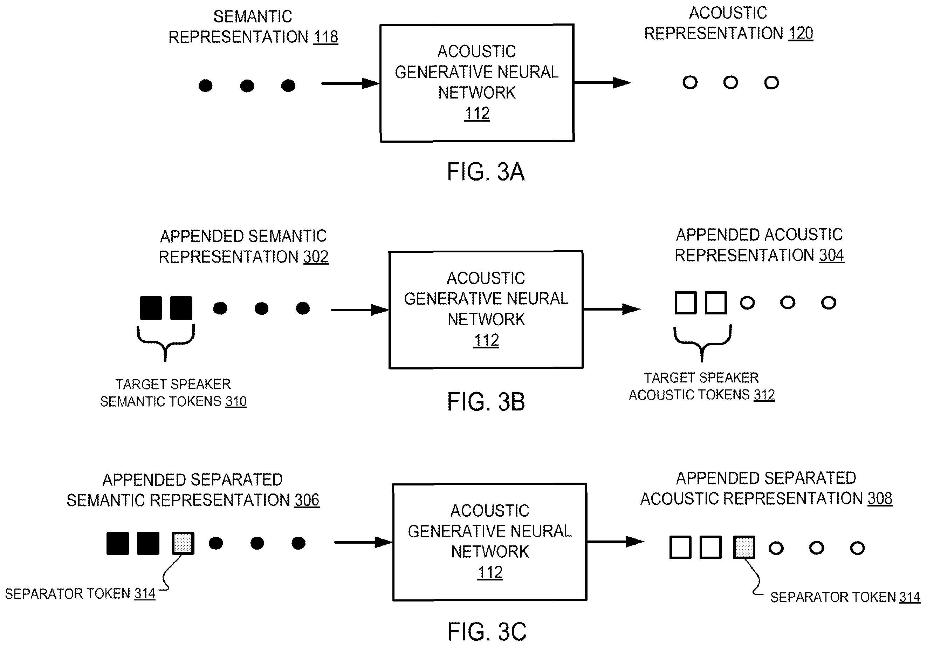

In some examples, the audio generation system 102 can use voice-prompting to condition the acoustic generative neural network on a semantic representation of a target voice prompt, as described in further detail with reference to FIG. 3. The semantic representation of the target voice prompt can include semantic tokens representing the target voice prompt, and, in some examples, an acoustic representation of the target voice prompt including acoustic tokens.

Overall, by generating a semantic representation from the input text and an acoustic representation from the semantic representation of the input text, the system can divide the inference and the training into two sequence-to-sequence tasks. Division of the sequence-to-sequence tasks can result in increased quality of training of the generative neural network for each task. Additionally, the system can reduce latency associated with data collection for training by using pre-training and backtranslation to leverage the relatively small text-speech dataset, which, along with performing voice-prompting, allows the system to generate diverse speech from multiple speakers with increased efficiency.

FIG. 2 shows a block diagram of an example training system. The training system 108 is an example of a system in which the systems, components, and techniques described below are implemented. For example, a system, e.g., the audio generation system 102 of FIG. 1, appropriately configured in accordance with this specification, can implement the training system 108.

The training system 108 can train the semantic generative neural network 110 to process the input text 116 and generate a semantic representation 118 of the input text 116, and the acoustic generative neural network to process the semantic representation 118 to generate the acoustic representation 120.

The semantic generative neural network 110 includes an encoder 216 trained to encode training inputs 122 that include text tokens and a decoder 218 trained to decode (e.g., uncorrupt) the training inputs 122 by mapping the text tokens to one or more semantic tokens of a semantic representation. In general, an encoder and a decoder of a neural network can have a number of layers (e.g., blocks) for performing a task.

The training inputs 122 include the speech-only dataset 210 and the initial parallel text-speech dataset 212. The speech-only dataset 210 includes multiple semantic representations each corresponding to an audio signal, and the initial parallel text-speech dataset 212 includes multiple semantic representations each corresponding to input text, where the semantic representations are extracted from audio signals that correspond to the input text.

In general, the training system 108 performs pre-training 202 to pre-train the semantic generative neural network 110 on a denoising objective using the speech-only dataset, and the training system 108 performs backtranslation 204 by training a backtranslation model to generate text tokens from audio inputs, where the training system 108 uses the trained backtranslation model 224 to generate a parallel-text speech dataset 214. The training system then performs fine-tuning 206 by fine-tuning the pre-trained semantic generative neural network 208 using the generated parallel-text speech dataset 214 and the initial text-speech dataset 212.

The training system 108 performs pre-training 202 of the semantic generative neural network 110 by training the semantic generative neural network 110 to generate uncorrupted semantic representations. In particular, the training system 108 pre-trains the encoder 216 and the decoder 218 of the semantic generative neural network 110 on the denoising objective using the speech-only dataset 210. In particular, prior to pre-training 202, the training system 108 processes the semantic representations of the speech-only dataset 210 to generate corrupted versions of the semantic representations. For example, the training system 108 can process a sequence of multiple semantic tokens and generate a corrupted version of the sequence by randomly substituting, deleting, or masking one or more semantic tokens of the sequence. The training system 108 can then provide the corrupted sequence of semantic tokens and the uncorrupted sequence of semantic tokens to the semantic generative neural network 110 to train the semantic generative neural network 110 on the denoising objective.

The denoising objective includes generating uncorrupted semantic representations (e.g., sequences of semantic tokens) by processing the corrupted semantic representations generated from speech-only dataset 210.In this case, the semantic generative neural network 110 is pre-trained to perform denoising by predicting masked semantic tokens based on the context of surrounding uncorrupted semantic tokens. For example, the semantic generative neural network 110 is trained to encode the corrupted semantic representations and generate uncorrupted semantic representations based on a contrastive loss using the ground-truth training inputs (e.g., the corresponding uncorrupted semantic representations).

After pre-training the semantic generative neural network 208, the system performs backtranslation 204 to generate the parallel text-speech dataset 214 for fine-tuning the pre-trained semantic generative neural network 208. The parallel text-speech dataset 214 includes text tokens that each correspond to a semantic representation 118.

The training system 108 generates the text tokens of the parallel-text speech dataset by processing the semantic representations of the speech-only dataset 210 using a backtranslation model 224. The backtranslation model 224 is trained to generate tokenized text corresponding to a semantic representation by processing the semantic representation. In particular, the backtranslation model 224 includes an encoder 220 trained to encode semantic representations from the initial parallel-text speech dataset 212 and a decoder 222 configured to generate tokenized text corresponding to the semantic representations of the initial parallel-text speech dataset 212. The backtranslation model 224 may be initialized from the pre-trained semantic generative neural network 208.

During training of the back-translation model 224, the system trains (e.g., generates) the backtranslation model by fine-tuning each of the layers of the decoder 222 on an objective using the initial parallel text-speech dataset 212. The objective includes generating tokenized text by processing the semantic representations of the initial parallel text-speech dataset 212. In this case, the system fixes the encoder 220 (i.e. the parameters of the encoder 220 are held fixed and are not modified).

During inference of the backtranslation model 224, the system uses the backtranslation model 224 to generate the parallel-text speech dataset 214 by processing the semantic representations of the speech-only dataset 212 and generating corresponding tokenized text. Thus, the parallel text-speech dataset includes the audio input and tokenized text pairs, and the system can generate a relatively large dataset using the backtranslation model 224, which can increase the efficiency of fine-tuning the semantic generative neural network 208 and can generate larger amounts of training data for low-resource languages.

The system then performs fine-tuning 206 on the pre-trained semantic generative neural network 208 using the initial parallel text-speech dataset 212 and the generated parallel text-speech dataset 214. The system first fine-tunes the pre-trained semantic generative neural network 208 on an objective to generate semantic representations of tokenized text of the parallel text-speech dataset 214. In particular, the system fine-tunes the pre-trained semantic generative neural network 208 by fine-tuning the lower layers) of the encoder 220 and fixing the upper layers of the encoder 220 and the decoder 222 (that is, the corresponding parameters are held fixed and not modified). The number of layers to fine-tune is based on a hyperparameter associated with the amount of training inputs 122.

After fine-tuning the pretrained semantic generative neural network 208 using the parallel text-speech dataset 214, the system fine-tunes the pre-trained semantic generative neural network 208 on the initial parallel text-speech dataset by fine-tuning the decoder 222 and fixing the encoder 220 of the pre-trained semantic generative neural network (that is, the parameters of the encoder 220 are held fixed and not modified).

Thus, by performing pre-training and backtranslation in order to generate the large parallel-text speech dataset 214, the training system 108 can efficiently train the semantic generative neural network 208. In particular, the system can train the semantic generative neural network 208 on a large amount of unlabeled speech data, which can increase the quality and the diversity of the generated speech regardless of the size of the initial parallel data (e.g., the initial parallel text-speech dataset 212) or whether the initial parallel data includes speech for only a single speaker.

FIG. 3A is an example diagram of an acoustic generative neural network that is configured to generate an acoustic representation of a semantic representation. For convenience, the acoustic generative neural network 112 will be described as being implemented by a system. For example, an audio generation system, e.g., the audio generation system 102 of FIG. 1, appropriately configured in accordance with this specification, can implement the acoustic generative neural network 112.

The system can train the acoustic generative neural network 112 to generate the acoustic representation 120 by processing the semantic representation 118. The acoustic representation 120 includes one or more acoustic tokens corresponding to respective semantic tokens of the semantic representation 118, where each of the acoustic tokens represent acoustic properties of the audio signal.

In general, by separating the task of generating the semantic representation and the task of generating the acoustic representation, the system can efficiently train the acoustic generative neural network 112 using an audio-only dataset.

In particular, the system trains the acoustic generative neural network 112 on an objective to map semantic tokens of the semantic representation to one or more acoustic tokens for each semantic representation and acoustic representation pair of the audio-only dataset. The acoustic tokens represent features of the speech or sound, such as particular voice, tempo, and/or recording conditions. Additionally, because the system trains the acoustic generative neural network separately from the semantic generative neural network, the acoustic generative neural network can be trained to generate acoustic tokens with features of multiple speakers, regardless of whether semantic generative neural network is trained on a single-speaker dataset. In some examples, the system can use voice-prompting to generate a prompt-aware acoustic representation during inference of the acoustic generative neural network 112, as described in further detail below with reference to FIGs. 3B and 3C.

FIG. 3B is an example diagram of performing voice-prompting during inference of an acoustic generative neural network to generate an appended acoustic representation of a semantic representation. For convenience, the acoustic generative neural network 112 will be described as being implemented by a system. For example, an audio generation system, e.g., the audio generation system 102 of FIG. 1, appropriately configured in accordance with this specification, can implement the acoustic generative neural network 112.

In some examples, the system can perform voice-prompting by conditioning the acoustic generative neural network 112 with a portion of a semantic representation and an acoustic representation of a target voice prompt from a target speaker. In particular, the system can generate an appended semantic representation 302, and the system can process the appended semantic representation 302 using the trained acoustic generative neural network 112 to generate an appended acoustic representation 304.

For example, the system can obtain a semantic representation of a target voice prompt that includes the target speaker semantic tokens 310 and an acoustic representation of the target voice prompt that includes the target speaker acoustic tokens 312. The system can prepend the semantic tokens 310 of the target voice prompt to the semantic representation 118 to generate the appended semantic representation 302. The system can then process the appended semantic representation 302 to generate the acoustic representation 120, and the system appends the acoustic tokens 312 of the target voice prompt to the acoustic representation 120 to generate the appended acoustic representation.

Thus, the system can efficiently generate the acoustic representation 120 and preserve the voice and speaking conditions of the target speaker represented by the acoustic tokens 312, which is particularly useful for low-resource languages where only single-speaker parallel data is available. Additionally, voice-prompting allows for minimizing the noise of the generated acoustic representation 120 based on selecting a relatively noise-free voice prompt for conditioning.

FIG. 3C is an example diagram of performing voice-prompting during inference of an acoustic generative neural network to generate an appended separated acoustic representation of a semantic representation. For convenience, the acoustic generative neural network 112 will be described as being implemented by a system. For example, an audio generation system, e.g., the audio generation system 102 of FIG. 1, appropriately configured in accordance with this specification, can implement the acoustic generative neural network 112.

The system can perform voice-prompting by conditioning the acoustic generative neural network 112 with a portion of a semantic representation and an acoustic representation of a target voice prompt from a target speaker. In some examples, the system can generate an appended semantic representation 302, and the system can process the appended semantic representation 302 using the trained acoustic generative neural network 112 to generate an appended acoustic representation 304.

In some other examples, the system can insert separator tokens 314 to generate an appended separated semantic representation 305 and an appended acoustic semantic representation 308. In particular, the system can insert a first separator token 314 between the target speaker semantic tokens 310 and the semantic representation 118 and a second separator token 314 between the target speaker acoustic tokens 312 and the acoustic representation 120.

By inserting the separator tokens, the system can efficiently condition the acoustic generative neural network to generate acoustic representation 120 based on the target voice prompt by indicating a discontinuity between the target speaker tokens and the semantic tokens, which reduces the level of noise in generating the acoustic representation 120.

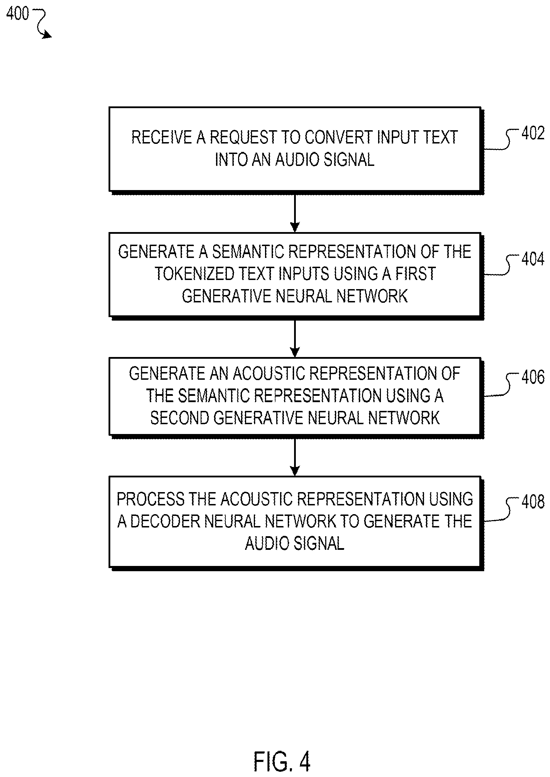

FIG. 4 is a flow diagram of an example process for generating an audio signal from text using a first and a second generative neural network. For convenience, the process 400 will be described as being performed by a system. For example, a system, e.g., the audio generation system 102 of FIG. 1, appropriately configured in accordance with this specification, can perform the process 400.

The process receives a request to convert input text into an audio signal (402). The input text includes multiple tokenized text inputs (e.g., text tokens).

The process generates a semantic representation of the tokenized text inputs using a first generative neural network (404). In particular, the system processes the text tokens using the first generative neural network (e.g., the semantic generative neural network) to generate the semantic representation. The semantic representation includes semantic tokens representing semantic content of the text tokens, where each semantic token is selected from a vocabulary of semantic tokens.

The semantic generative neural network may have an encoder-decoder Transformer architecture, and the semantic generative neural network may be trained on a parallel text-speech dataset that maps text to semantic representations of audio corresponding to the text.

In general, the process can train the semantic generative neural network by performing pre-training on a first objective, performing backtranslation using a backtranslation neural network to generate the parallel-text speech dataset, and fine-tuning the semantic generative neural network on a second objective.

The process can pre-train the semantic generative neural network on the first objective using semantic representations of a speech-only dataset, and the system fine-tunes the pre-trained semantic generative neural network on the second objective using the parallel text-speech dataset. The first objective may include generating uncorrupted semantic representations of the speech-only dataset by denoising corrupted semantic representations of the speech-only dataset, and the second objective may include generating semantic representations of text of the parallel text-speech dataset.

After pre-training semantic generative neural network, the process can generate the parallel-text speech dataset by generating a backtranslation model that backtranslates from semantic representations to text and generating the parallel-text speech dataset by processing the speech-only dataset using the back translation model. In particular, the process can generate the backtranslation model by fine-tuning the pre-trained semantic generative neural network on a third objective using an initial parallel text-speech dataset. The third objective may include generating semantic representations of text of the initial parallel-text speech dataset.

The process can then fine-tune the pre-trained semantic generative neural network by fine-tuning lower layers of the encoder of the pre-trained semantic generative neural network and fixing the upper layers of the encoder and the decoder of the pre-trained semantic generative neural network. After fine-tuning the pretrained semantic generative neural network on the second objective using the parallel text-speech dataset, the system can fine-tune the pre-trained semantic generative neural network on the initial parallel-text speech dataset by fine-tuning the decoder and fixing the encoder of the pre-trained semantic generative neural network.

The process generates an acoustic representation of the semantic representation using a second generative neural network (406). In particular, the process processes the semantic tokens using the second generative neural network (e.g., the acoustic generative neural network) to generate the acoustic representation of the semantic representation. The acoustic representation includes one or more respective acoustic tokens for each of the semantic tokens. The acoustic tokens may represent acoustic properties of the audio signal.

The acoustic generative neural network can have a decoder-only Transformer architecture, and the acoustic generative neural network may be trained on an audio-only dataset. The audio-only dataset may include a respective semantic representation and a respective acoustic representation for each of multiple training audio inputs.

In some examples, the process obtains a semantic representation of a target voice prompt that includes semantic tokens and an acoustic representation of the target voice prompt that includes acoustic tokens. In this case, the second generative neural network may be conditioned on at least the semantic representation and the acoustic representation of the target voice prompt. For example, the process prepends the semantic representation of the target voice prompt prior to the semantic representation of the tokenized inputs, and the process then generates an appended semantic representation by appending the acoustic representation of the target voice prompt after the semantic representation of the tokenized text inputs. In this example, the acoustic generative neural network is conditioned on the appended semantic representation.

In some examples, the process can generate the appended semantic representation by inserting a first separator token between the semantic representation of the target voice prompt and the semantic representation of the tokenized inputs and inserting a second separator token between the semantic representation of the tokenized inputs and the acoustic representation of the target voice prompt.

The process processes the acoustic representation using a decoder neural network to generate the audio signal (408). In particular, the audio signal represents audio characteristics, such as voice, tempo, and recording conditions.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims.

## Claims

1. A computer-implemented method for generating an audio signal from input text, the method comprising:
receiving (402) a request to convert input text into an audio signal, wherein the input text comprises a plurality of tokenized text inputs;
generating (404), using a first generative neural network, a semantic representation of the tokenized text inputs comprising semantic tokens representing semantic content of the tokenized text inputs, each semantic token being selected from a vocabulary of semantic tokens;
the computer-implemented method being **characterised by** further comprising:
generating (406), using a second generative neural network and conditioned on at least the semantic representation, an acoustic representation of the semantic representation comprising one or more respective acoustic tokens representing acoustic properties of the audio signal; and
processing (408) the acoustic representation using a decoder neural network to generate the audio signal.

2. The method of claim 1, wherein the first generative neural network has an encoder-decoder Transformer architecture.

3. The method of claim 1 or claim 2, wherein the first generative neural network is trained on a parallel text-speech dataset that maps text to semantic representations of audio corresponding to the text.

4. The method of claim 3, wherein the training on the parallel text-speech dataset comprises:
pre-training the first generative neural network on a first objective using semantic representations of a speech-only dataset; and
fine-tuning the pre-trained first generative neural network on a second objective using the parallel text-speech dataset.

5. The method of claim 4, wherein fine-tuning the pre-trained first generative neural network on a second objective using the parallel text-speech dataset further comprises:
fine-tuning lower layers of the encoder of the pre-trained first generative neural network and fixing the upper layers of the encoder of the pre-trained first generative neural network and the decoder of the pre-trained first generative neural network.

6. The method of claim 4 or claim 5, wherein the training comprises, after pre-training the first generative neural network:
generating a backtranslation model that backtranslates from semantic representations to text by fine-tuning the pre-trained first generative neural network on a third objective using an initial parallel text-speech dataset; and
generating the parallel-text speech dataset by processing the speech-only dataset using the backtranslation model; and optionally
wherein the training further comprises, after fine-tuning the pre-trained first generative neural network on a second objective using the parallel text-speech dataset:
fine-tuning the pre-trained first generative neural network on the initial parallel-text speech dataset; and optionally
wherein fine-tuning the pre-trained first generative neural network on the initial parallel-text speech dataset further comprises:
fine-tuning the decoder of the pre-trained first generative neural network and fixing the encoder of the pre-trained first generative neural network.

7. The method of any one of claims 4-6, wherein the first objective comprises generating uncorrupted semantic representations of the speech-only dataset by denoising corrupted semantic representations of the speech-only dataset.

8. The method of any one of claims 4-7, wherein the second objective comprises generating semantic representations of text of the parallel text-speech dataset.

9. The method of any preceding claim when dependent on claim 6, wherein the third objective comprises generating semantic representations of text of the initial parallel-text speech dataset.

10. The method of any preceding claim, wherein the second generative neural network has a decoder-only Transformer architecture.

11. The method of any preceding claim, wherein the second generative neural network is trained on an audio-only dataset, wherein the audio-only dataset comprises, for each of a plurality of training audio inputs, a respective semantic representation and a respective acoustic representation.

12. The method of any preceding claim, further comprising:
obtaining a semantic representation of a target voice prompt comprising semantic tokens and a acoustic representation of the target voice prompt comprising acoustic tokens; and
wherein the second generative neural network is conditioned on at least the semantic representation of the target voice prompt and the acoustic representation of the target voice prompt; and optionally;
wherein generating, using a second generative neural network and conditioned on at least the semantic representation, an acoustic representation of the semantic representation further comprises:
prepending the semantic representation of the target voice prompt prior to the semantic representation of the tokenized inputs; and
generating an appended semantic representation by appending the acoustic representation of the target voice prompt after the semantic representation of the tokenized text inputs, wherein the second generative neural network is conditioned on the appended semantic representation; and optionally
wherein generating the appended semantic representation further comprises:
inserting a first separator token between the semantic representation of the target voice prompt and the semantic representation of the tokenized inputs; and
inserting a second separator token between the semantic representation of the tokenized inputs and the acoustic representation of the target voice prompt.

13. The method of any preceding claim, wherein the decoder neural network generates the audio signal comprising audio characteristics of voice, tempo, and recording conditions.

14. A system comprising:
one or more computers; and
one or more storage devices communicatively coupled to the one or more computers, wherein the one or more storage devices store instructions that, when executed by the one or more computers, cause the one or more computers to perform operations of the respective method of any one of claims 1-13.

15. One or more non-transitory computer storage media storing instructions that when executed by one or more computers cause the one or more computers to perform operations of the respective method of any one of claims 1-13.

## Patentansprüche

1. Computerimplementiertes Verfahren zum Erzeugen eines Audiosignals aus Eingabetext, wobei das Verfahren Folgendes umfasst:
Empfangen (402) einer Anforderung zum Umwandeln eines Eingabetextes in ein Audiosignal, wobei der Eingabetext eine Vielzahl von tokenisierten Texteingaben umfasst;
Erzeugen (404) einer semantischen Darstellung der tokenisierten Texteingaben, umfassend semantische Token, die den semantischen Inhalt der tokenisierten Texteingaben darstellen, unter Verwendung eines ersten generativen neuronalen Netzes, wobei jedes semantische Token aus einem Vokabular von semantischen Token ausgewählt wird;
wobei das computerimplementierte Verfahren **dadurch gekennzeichnet ist, dass** es ferner Folgendes umfasst:
Erzeugen (406) einer akustischen Darstellung der semantischen Darstellung, die ein oder mehrere jeweilige akustische Token umfasst, die akustische Eigenschaften des Audiosignals darstellen, unter Verwendung eines zweiten generativen neuronalen Netzes und konditioniert auf mindestens die semantische Darstellung; und
Verarbeiten (408) der akustischen Darstellung unter Verwendung eines neuronalen Decodierernetzes, um das Audiosignal zu erzeugen.

2. Verfahren nach Anspruch 1, wobei das erste generative neuronale Netz eine Codierer-/Decodierer-Transformer-Architektur aufweist.

3. Verfahren nach Anspruch 1 oder Anspruch 2, wobei das erste generative neuronale Netz auf einem parallelen Text-Sprach-Datensatz trainiert wird, der Text auf semantische Darstellungen von Audio abbildet, die dem Text entsprechen.

4. Verfahren nach Anspruch 3, wobei das Trainieren mit dem parallelen Text-Sprach-Datensatz Folgendes umfasst:
Vortrainieren des ersten generativen neuronalen Netzes auf ein erstes Ziel unter Verwendung semantischer Darstellungen eines Nur-Sprach-Datensatzes; und
Feinabstimmen des vortrainierten ersten generativen neuronalen Netzes auf ein zweites Ziel unter Verwendung des parallelen Text-Sprach-Datensatzes.

5. Verfahren nach Anspruch 4, wobei das Feinabstimmen des vortrainierten ersten generativen neuronalen Netzes auf ein zweites Ziel unter Verwendung des parallelen Text-Sprach-Datensatzes Folgendes umfasst:
Feinabstimmen der unteren Schichten des Codierers des vortrainierten ersten generativen neuronalen Netzes und Festlegen der oberen Schichten des Codierers des vortrainierten ersten generativen neuronalen Netzes und des Decodierers des vortrainierten ersten generativen neuronalen Netzes.

6. Verfahren nach Anspruch 4 oder Anspruch 5, wobei das Trainieren nach dem Vortrainieren des ersten generativen neuronalen Netzes Folgendes umfasst:
Erzeugen eines Rückübersetzungsmodells, das von semantischen Darstellungen in Text rückübersetzt, durch Feinabstimmen des vortrainierten ersten generativen neuronalen Netzes auf ein drittes Ziel unter Verwendung eines anfänglichen parallelen Text-Sprach-Datensatzes; und
Erzeugen des Paralleltext-Sprach-Datensatzes durch Verarbeiten des Nur-Sprach-Datensatzes unter Verwendung des Rückübersetzungsmodells; und optional
wobei das Trainieren nach dem Feinabstimmen des vortrainierten ersten generativen neuronalen Netzes auf ein zweites Ziel unter Verwendung des parallelen Text-Sprach-Datensatzes ferner Folgendes umfasst:
Feinabstimmen des vortrainierten ersten generativen neuronalen Netzes auf dem anfänglichen Paralleltext-Sprach-Datensatz; und optional
wobei das Feinabstimmen des vortrainierten ersten generativen neuronalen Netzes auf dem anfänglichen Paralleltext-Sprach-Datensatz ferner Folgendes umfasst:
Feinabstimmen des Decodierers des vortrainierten ersten generativen neuronalen Netzes und Festlegen des Codierers des vortrainierten ersten generativen neuronalen Netzes.

7. Verfahren nach einem der Ansprüche 4-6, wobei das erste Ziel das Erzeugen von unverfälschten semantischen Darstellungen des Nur-Sprach-Datensatzes durch Entrauschen von verfälschten semantischen Darstellungen des Nur-Sprach-Datensatzes umfasst.

8. Verfahren nach einem der Ansprüche 4-7, wobei das zweite Ziel Erzeugen von semantischen Darstellungen von Text aus dem parallelen Text-Sprach-Datensatz umfasst.

9. Verfahren nach einem der vorhergehenden Ansprüche, wenn es von Anspruch 6 abhängt, wobei das dritte Ziel Erzeugen semantischer Darstellungen von Text aus dem anfänglichen Paralleltext-Sprach-Datensatz umfasst.

10. Verfahren nach einem der vorhergehenden Ansprüche, wobei das zweite generative neuronale Netz eine Nur-Decoder-Transformer-Architektur aufweist.

11. Verfahren nach einem der vorhergehenden Ansprüche, wobei das zweite generative neuronale Netz auf einem Nur-Audiodatensatz trainiert wird, wobei der Nur-Audiodatensatz für jede einer Vielzahl von Trainings-Audioeingaben eine entsprechende semantische Darstellung und eine entsprechende akustische Darstellung umfasst.

12. Verfahren nach einem der vorhergehenden Ansprüche, ferner umfassend:
Erlangen einer semantischen Darstellung einer Eingabeaufforderung der Zielsprachenstimme, die semantische Token umfasst, und einer akustischen Darstellung der Eingabeaufforderung der Zielsprachenstimme, die akustische Token umfasst; und
wobei das zweite generative neuronale Netz mindestens von der semantischen Darstellung der Eingabeaufforderung der Zielsprachenstimme und der akustischen Darstellung der Eingabeaufforderung der Zielsprachenstimme abhängig ist; und optional;
wobei das Erzeugen einer akustischen Darstellung der semantischen Darstellung unter Verwendung eines zweiten generativen neuronalen Netzes und konditioniert auf mindestens die semantische Darstellung ferner Folgendes umfasst:
Voranstellen der semantischen Darstellung der Eingabeaufforderung der Zielsprache vor der semantischen Darstellung der tokenisierten Eingaben; und
Erzeugen einer angehängten semantischen Darstellung durch Anhängen der akustischen Darstellung der Eingabeaufforderung der Zielsprache an die semantische Darstellung der tokenisierten Texteingaben, wobei das zweite generative neuronale Netz auf die angehängte semantische Darstellung konditioniert ist; und optional
wobei das Erzeugen der angehängten semantischen Darstellung ferner Folgendes umfasst:
Einfügen eines ersten Trenn-Tokens zwischen der semantischen Darstellung der Eingabeaufforderung der Zielsprachenstimme und der semantischen Darstellung der tokenisierten Eingaben; und
Einfügen eines zweiten Trenn-Tokens zwischen der semantischen Darstellung der tokenisierten Eingaben und der akustischen Darstellung der Eingabeaufforderung für die Zielsprachenstimme.

13. Verfahren nach einem der vorhergehenden Ansprüche, wobei das neuronale Decodierer-Netz das Audiosignal erzeugt, umfassend Audiomerkmale der Stimme, des Tempos und der Aufnahmebedingungen.

14. System, umfassend:
einen oder mehrere Computer; und
eine oder mehrere Speichervorrichtungen, die kommunikativ an den einen oder die mehreren Computer gekoppelt sind, wobei die eine oder mehreren Speichervorrichtungen Anweisungen speichern, die bei Ausführung durch den einen oder die mehreren Computer den einen oder die mehreren Computer dazu veranlassen, Vorgänge des jeweiligen Verfahrens nach einem der Ansprüche 1-13 durchzuführen.

15. Ein oder mehrere nichttransitorische Computerspeichermedien, die Anweisungen speichern, die, wenn sie durch einen oder mehrere Computer ausgeführt werden, den einen oder die mehreren Computer dazu veranlassen, die Vorgänge des jeweiligen Verfahrens nach einem der Ansprüche 1-13 durchzuführen.

## Revendications

1. Procédé mis en œuvre par ordinateur pour générer un signal audio à partir d'un texte saisi, le procédé comprenant :
la réception (402) d'une demande de conversion de texte d'entrée en un signal audio, dans lequel le texte d'entrée comprend une pluralité d'entrées de texte tokenisées ;
la génération (404), à l'aide d'un premier réseau neuronal génératif, d'une représentation sémantique des entrées de texte tokenisées comprenant des jetons sémantiques représentant le contenu sémantique des entrées de texte tokenisées, chaque jeton sémantique étant sélectionné à partir d'un vocabulaire de jetons sémantiques ;
le procédé mis en œuvre par ordinateur étant **caractérisé en ce qu'**il comprend également :
la génération (406), à l'aide d'un second réseau neuronal génératif et conditionné au moins par la représentation sémantique, d'une représentation acoustique de la représentation sémantique comprenant un ou plusieurs jetons acoustiques respectifs représentant les propriétés acoustiques du signal audio ; et
le traitement (408) de la représentation acoustique à l'aide d'un réseau neuronal décodeur pour générer le signal audio.

2. Procédé selon la revendication 1, dans lequel le premier réseau neuronal génératif a une architecture de transformateur encodeur-décodeur.

3. Procédé selon la revendication 1 ou la revendication 2, dans lequel le premier réseau neuronal génératif est entraîné sur un ensemble de données texte-parole parallèle qui mappe d'un texte à des représentations sémantiques d'un audio correspondant au texte.

4. Procédé selon la revendication 3, dans lequel l'entraînement sur l'ensemble de données texte-parole parallèle comprend :
le pré-entraînement du premier réseau neuronal génératif sur un premier objectif à l'aide de représentations sémantiques d'un ensemble de données vocales uniquement ; et
le réglage fin du premier réseau neuronal génératif pré-entraîné sur un deuxième objectif à l'aide de l'ensemble de données texte-parole parallèle.

5. Procédé selon la revendication 4, dans lequel le réglage fin du premier réseau neuronal génératif pré-entraîné sur un deuxième objectif à l'aide de l'ensemble de données texte-parole parallèle comprend également :
le réglage fin de couches inférieures de l'encodeur du premier réseau neuronal génératif pré-entraîné et la fixation des couches supérieures de l'encodeur du premier réseau neuronal génératif pré-entraîné et du décodeur du premier réseau neuronal génératif pré-entraîné.

6. Procédé selon la revendication 4 ou la revendication 5, dans lequel l'entraînement comprend, après le pré-entraînement du premier réseau neuronal génératif :
la génération d'un modèle de rétrotraduction qui rétrotraduit des représentations sémantiques en texte en faisant un réglage fin du premier réseau neuronal génératif pré-entraîné sur un troisième objectif à l'aide d'un ensemble de données texte-parole parallèle initial ; et
la génération de l'ensemble de données vocales en texte parallèle en traitant l'ensemble de données vocales uniquement à l'aide du modèle de rétrotraduction ; et éventuellement
dans lequel l'entraînement comprend également, après le réglage fin du premier réseau neuronal génératif pré-entraîné sur un deuxième objectif à l'aide de l'ensemble de données texte-parole parallèle :
le réglage fin du premier réseau neuronal génératif pré-entraîné sur l'ensemble de données vocales en texte parallèle initial ;
et éventuellement
dans lequel le réglage fin du premier réseau neuronal génératif pré-entraîné sur l'ensemble de données vocales en texte parallèle initial comprend également :
le réglage fin du décodeur du premier réseau neuronal génératif pré-entraîné et la fixation de l'encodeur du premier réseau neuronal génératif pré-entraîné.

7. Procédé selon l'une quelconque des revendications 4 à 6, dans lequel le premier objectif comprend la génération de représentations sémantiques non corrompues de l'ensemble de données vocales uniquement en débruitant les représentations sémantiques corrompues de l'ensemble de données vocales uniquement.

8. Procédé selon l'une quelconque des revendications 4 à 7, dans lequel le deuxième objectif comprend la génération de représentations sémantiques du texte de l'ensemble de données texte-parole parallèle.

9. Procédé selon une quelconque revendication précédente lorsqu'il dépend de la revendication 6, dans lequel le troisième objectif comprend la génération de représentations sémantiques du texte de l'ensemble de données de parole en texte parallèle initial.

10. Procédé selon une quelconque revendication précédente, dans lequel le second réseau neuronal génératif a une architecture de transformateur à décodeur uniquement.

11. Procédé selon une quelconque revendication précédente, dans lequel le second réseau neuronal génératif est entraîné sur un ensemble de données audio uniquement, dans lequel l'ensemble de données audio uniquement comprend, pour chacune d'une pluralité d'entrées audio de formation, une représentation sémantique respective et une représentation acoustique respective.

12. Procédé selon une quelconque revendication précédente, comprenant également :
l'obtention d'une représentation sémantique d'une invite vocale cible comprenant des jetons sémantiques et une représentation acoustique de l'invite vocale cible comprenant des jetons acoustiques ; et
dans lequel le deuxième réseau neuronal génératif est conditionné au moins par la représentation sémantique de l'invite vocale cible et par la représentation acoustique de l'invite vocale cible ; et éventuellement ;
dans lequel la génération, à l'aide d'un second réseau neuronal génératif et conditionné au moins par la représentation sémantique, d'une représentation acoustique de la représentation sémantique comprend également :
l'ajout de la représentation sémantique de l'invite vocale cible avant la représentation sémantique des entrées tokenisées ; et
la génération d'une représentation sémantique ajoutée en ajoutant la représentation acoustique de l'invite vocale cible après la représentation sémantique des entrées de texte tokenisées, dans lequel le second réseau neuronal génératif est conditionné par la représentation sémantique ajoutée ; et
éventuellement
dans lequel la génération de la représentation sémantique ajoutée comprend également :
l'insertion d'un premier jeton séparateur entre la représentation sémantique de l'invite vocale cible et la représentation sémantique des entrées tokenisées ; et
l'insertion d'un second jeton séparateur entre la représentation sémantique des entrées tokenisées et la représentation acoustique de l'invite vocale cible.

13. Procédé selon une quelconque revendication précédente, dans lequel le réseau neuronal décodeur génère le signal audio comprenant des caractéristiques audio de voix, de tempo, et de conditions d'enregistrement.

14. Système comprenant :
un ou plusieurs ordinateurs ; et
un ou plusieurs dispositifs de stockage couplés en communication aux un ou plusieurs ordinateurs, dans lequel les un ou plusieurs dispositifs de stockage stockent des instructions qui, lorsqu'elles sont exécutées par les un ou plusieurs ordinateurs, amènent les un ou plusieurs ordinateurs à réaliser les opérations du procédé correspondant selon l'une quelconque des revendications 1 à 13.

15. Un ou plusieurs supports de stockage informatique non transitoire stockant des instructions qui lorsqu'elles sont exécutées par un ou plusieurs ordinateurs amènent les un ou plusieurs ordinateurs à réaliser les opérations du procédé correspondant selon l'une quelconque des revendications 1 à 13.
